# EUROPEAN PATENT SPECIFICATION

(11) **EP 0 516 101 B1**
(45) Date of publication and mention of the grant of the patent: **02.11.1994**
(21) Application number: 92108979.3
(22) Date of filing: 27.05.1992
(51) Int. Cl.: A23G 3/28, A23G 3/20, A23G 1/22, A23G 1/28, B29C 39/10, B29C 33/50

(54) **Elastic flexible molding die and process for manufacturing three-dimensional decorative moldings having a printed pattern**
Flexible und elastische Giessform und Herstellungsverfahren von dreidimensionale geformten Gegenständen mit bedruckten Munstern
Matrice de moulage élastique et flexible et procédé de fabrication de moulages décoratifs tridimensionnel avec motif imprimé

(30) Priority: 28.05.1991 JP 38443/91; 28.05.1991 JP 123544/91; 28.05.1991 JP 123545/91; 28.05.1991 JP 123546/91
(43) Date of publication of application: 02.12.1992
(73) Proprietor: AKUTAGAWA CONFECTIONARY CO., LTD., Tokyo (JP)
(72) Inventor: Otani, Uichi, Tokyo (JP)
(74) Representative: Herrmann-Trentepohl, Werner, Dipl.-Ing.

(56) References cited:
- EP-A- 0 242 059
- EP-A- 0 299 113
- EP-A- 0 318 594
- EP-A- 0 462 093
- DE-C- 444 238
- DE-C- 444 240
- US-A- 1 865 097
- US-A- 4 168 321

## Description

The present invention relates to an elastic flexible molding die and a process for manufacturing three-dimensional decorative moldings having a printed pattern. More particularly, the present invention relates to an elastic flexible molding die with a three-dimensional decorative pattern having a colorant or colorants attached thereto which correspond to the printed pattern and a process for manufacturing three-dimensional decorative molded articles having a mono- or multicolor printed pattern on the surface thereof wherein a moldable material is processed with the flexible molding die according to one-shot molding-coloring teatment.

From the past, the use of an elastic flexible molding die is well known for manufacturing a great deal of three-dimensional decorative moldings from a fluid or viscous moldable materials. In the official gazette of Japanese Laid-open Patent Appln. No. Sho. 63-31726. for example, there is disclosed a typical apparatus using such elastic flexible molding die. According to this apparatus, a molten chocolate material is charged into an elastic flexible molding die in the form of an open bag having an inner surface with a three-dimensional decorative pattern and the chocolate material with the corresponding decorative pattern is taken out from the die, after solidification, by expanding the opening of the flexible die by application of reduced pressure to the outer surface of the die.

The use of such elastic flexible molding die is recommended to manufacture moldings with three-dimensional decorative pattern on the surface thereof, for example, for manufacturing a chocolate cake with three-dimensional decorative pattern on the surface thereof in case of a moldable material being a chocolate material. According to the molding die of this type, however, it is impossible to manufacture moldings of a three-dimensional decorative pattern which are tinted, partly or wholly, with a single or plural colors in conformity with the decorative pattern. In case of chocolate cakes, for example, it is impossible according to such conventional process to manufacture a solid chocolate having a three-dimensional decorative pattern tinted with one or more colorants in conformity with the pattern. Also thinkable for manufacturing moldings of a colored pattern is to print the moldings thus obtained with at least one colorant. However, it is extremely difficult for all of the moldings to print exactly the same location of the pattern with a colorant, especially in the event plural colorants are used at a time or such printing has to be made repeatedly. What is more, the printing itself of the moldings may be difficult, for example, if they are too soft to be treated with a printing machine.

Under the above circumstances, there is a great demand in this art to develop a new type molding die and process for overcoming the drawbacks referred to above and for manufacturing molded articles with a three-dimensional decorative pattern simultaneously printed with at least one colorant.

### BRIEF SUMMARY OF THE INVENTION

Accordingly, it is an object of the present invention to provide an elastic flexible molding die for manufacturing molded articles having a three-dimensional decorative pattern printed with at least one colorant.

It is another object of the present invention to provide an elastic flexible molding die provided with a female figure corresponding to the three-dimensional decorative pattern and with a colorant or colorants precisely in the pattern.

It is still another object of the present invention to provide a process for manufacturing a molded article having a three-dimensional pattern printed partly or wholly with a colorant or colorants.

It is further object of the present invention to provide a method for tinting the three-dimensional decorative pattern of the elastic flexible molding die precisely with at least one colorant.

Other objects, features and advantages of the present invention will become apparant more fully from the following description.

As a result of extensive research made for developing a new type elastic flexible molding die which overcomes drawbacks as seen in the conventional art, it has now been found that such type of molding die can be obtained by bringing the inner surface of the molding die provided with female figure corresponding to a three-dimensional decorative pattern into contact with an elastic pad provided on the surface thereof with a coloring substance capable of printing a pattern in conformity with the decorative pattern. By the use of such flexible molding die, the coloring substance is attached, simultaneously with molding of a moldable material, onto the surface of the decorative pattern of the resultant moldings.

### DETAILED DESCRIPTION OF THE INVENTION

In accordance with one embodiment of the present invention, there is provided an elastic flexible molding die for manufacturing molded articles having a three-dimensional decorative pattern printed with a coloring substance, which comprises a molding die portion as a first constructive element in the form of a flexible open bag capable of being charged on the inner surface thereof with a fluid or viscous moldable material which may be taken out therefrom after solidification and a die holding portion as a second constructive element integrally shaped with an opening of the molding die portion and capable of maintaining the outer surface of the molding die portion under reduced pressure, characterized in that the molding die portion is provided on the inner surface thereof forming a female figure corresponding to the three-dimensional decorative pattern with at least one coloring substance transferred from an elastic pad portion as a third constructive element of the die and capable of printing a pattern in conformity with the decorative pattern on the material.

In accordance with another embodiment of the present invention, there is provided a process for manufacturing molded articles with a three-dimensional decorative pattern printed with at least one coloring substance, which comprises charging an elastic flexible molding die in the form of an open bag, which has on the inner surface thereof a female figure corresponding to the three-dimensional decorative pattern printed with at least one coloring substance, with a fluid or viscous moldable material, solidifying the moldable material in compliance with the pattern on the inner surface of the molding die while printing the material with the coloring substance, and thereafter discharging the resultant molded article from the die by expanding the volume of the die in the form of the open bag while optionally pushing out the article with a pushing device, characterized in that the molding die has been provided on the inner surface thereof with at least one coloring substance by bringing an elastic pad provided on the surface thereof with at least one coloring substance in compliance with the pattern into contact with the inner surface of the molding die.

It is a characteristic feature of the present invention to provide an elastic flexible molding die capable of manufacturing molded articles having a variety of three-dimensional decorative patterns printed with at least one coloring substance in one-shot treatment wherein molding and printing of the articles are concurrently carried out.

The elastic flexible molding die used in the present invention is in the form of an open bag into which a moldable fluid or viscous material can be introduced. Any of the known conventional elastic flexible molding die can be used in the present invention. The molding die is generally made of an elastic flexible natural or synthetic rubber or a synthetic resin of a similar nature. Typical examples of such rubber or synthetic resin include latex rubber, butyl rubber, SBR, silicone rubber, etc. and polyester, polyurethane, polyamide, polyether, polyolefin and the like resins. The molding die in the form of an open bag can be divided into two portions in structure; one is a molding die portion corresponding to the main body of the bag where a moldable material is introduced and its molding is achieved, and the other is a die holding portion corresponding to an annular or square-shaped opening portion of the bag. As a mater of course, the inner surface of the die portion has a female figure corresponding to a three-dimensional decorative pattern and also at least one colorant attached to the pattern by way of an elastic pad portion. The die holding portion surrounds the opening of the die portion, from which the moldings are taken out, and generally functions as a joint portion for connecting the molding die portion to an automatic molding apparatus. The shape of the die holding portion is generally a flat plate so as to facilitate mounting of the portion to a molding appartus, but is not limited to a plate-like structure; the die holding portion may be in the form of a funnel, cylinder or any combined complicate form so far as it firmly fix the die portion to the supporting structure. The molding die portion is preferably even in thickness but may have a slight concave-convex structure.

The moldable material is normally solid but is heated at the time of molding to become fluid or viscous so as to be suitable for introducing into the die portion. Illustrative of such moldable material are, for example, foods or confectionery materials such as chocolate, jelly, sugar candy, cheese, butter, boiled fish-paste and the like as well as industrial materials such as erasing rubber, soap, wax, gypsum, concrete and a thermoplastic resin for various daily necessaries. A liquid material of two- or multi-component system which can be reacted chemically, for example, by heating to form a solid may be used as the moldable material. A liquid material which can be solidified by cooling may also be used as the moldable material.

In case the moldable material is edible, care should be taken to choose the material for the elastic flexible molding die and the elastic pad so that they are non-toxic and not harmful for human and animals in view of Food Sanitation Law.

Any of the coloring substances can be used for the present invention, such as natural or synthetic dyes, pigments and materials which give colorants under the molding conditions. These coloring substances are normally selected from dyes and/or pigments in red, yellow, green, blue, white and other colors and a mixture thereof, and are used for tinting partly or wholly the decorative pattern of the molded article. For example, the decorative pattern is human head, red color is used for lip while brown or black color is used for hair. In case the moldable material is food or confectionery material, care should also be taken to select an edible dye or pigment in accordance with Food Sanitary Law. The colorant is actually used in the form of ink preparations containing the colorant with other various additives. In case the moldable material is food or confectionery material, for example, chocolate, such ink preparations are made by preparing a non-toxic, non-harmful cream or paste from various additives and tinting it with the coloring substance. Examples of these additives and auxiliary substances include, for example, a filler such as calcium carbonate, titanium dioxide or alumina, a solvent or thicker such as water, propylene glycol, isopropylene glycol, cane sugar fatty acid esters, glycerol fatty acid esters, hardened vegetable oils, lethicin, intermediate chain fatty acid triglycerides, bees wax, etc. and various emulsifiers, stabilizers and defoaming agents (silicone resins). More specifically, the ink preparations may be a water-soluble O/W type emulsion wherein the coloring substances and emulsifiers are dispersed which is prepared by mixing cane sugar fatty acid esters, propylene glycol, calcium carbonate, titinium dioxide, edible Yellow No. 4 lake, edible Yellow No. 5 lake, water, glycerol fatty acid esters, hardened vegetable oils and silicone resins, or a substantially water-insoluble W/O type emulsion wherein the whole system is oily and the coloring substances and emulsifiers are dispersed which is prepared by mixing hardened vegetable oils, bees wax, glycerol fatty acid esters, lethicin, intermediate chain fatty acid triglycerides, calcium carbonate, titanium dioxide, edible Yellow No. 4 lake, edible Yellow No. 5 lake and water.

The elastic pad is tinted with at least one coloring substance in conformity with the decorative pattern and pushed into the molding die in the form of a bag and brought into contact with the decorative die on the inner surface of the die whereby the coloring substance is transferred precisely to the location of the pattern where tinting is necessary. As will be described hereinafter, the shape of the elastic pad may be rod-like or any suitable form in accordance with the shape of the pattern. In the extreme case, the elastic pad may be in the form of a flat plate.

The present invention can more fully be understood from the following description taken in conjunction with the accompanying drawings in which:
Fig. 1(a) is an explanatory drawing showing the cross section of an example of the elastic pad of this invention and Fig. 1(b) is a perspective view showing the elastic pad as shown in Fig. 1(a).
Fig. 2 is an explanatory drawing showing the cross section of an example of the elastic flexible molding die of this invention together with the open state of a conventional subatmospheric pressure chamber.
Fig. 3 is an explanatory drawing showing the cross section of another example of the elastic flexible molding die tightly mounted to a subatmospheric pressure chamber and subjected to evacuation of the chamber.
Fig. 4 is a partial explanatory drawing showing the state of the elastic pad being introduced into the molding die and brought into contact with the inner surface thereof.
Fig. 5 is an explanatory drawing showing another mode of the contact of the elastic pad with the inner surface of the molding die mounted to a subatmospheric chamber.
Fig. 6 is an explanatory drawing showing still another mode of the contact of the elastic pad with the inner surface of the molding die mounted to a special subatmospheric pressure chamber.
Fig. 7 is a partial explanatory drawing showing the state of a moldable material being introduced into the molding die and being tinted with coloring materials.
Fig. 8 is an explanatory drawing showing the state of a molded article being taken out from the molding die.
Fig. 9(a) is a perspective view showing the molded article obtained, for example, from the molding die as shown in Fig. 7, and Fig. 9(b) is a perspective view showing the molded article obtained, for example, from the molding die as shown in Fig. 4.

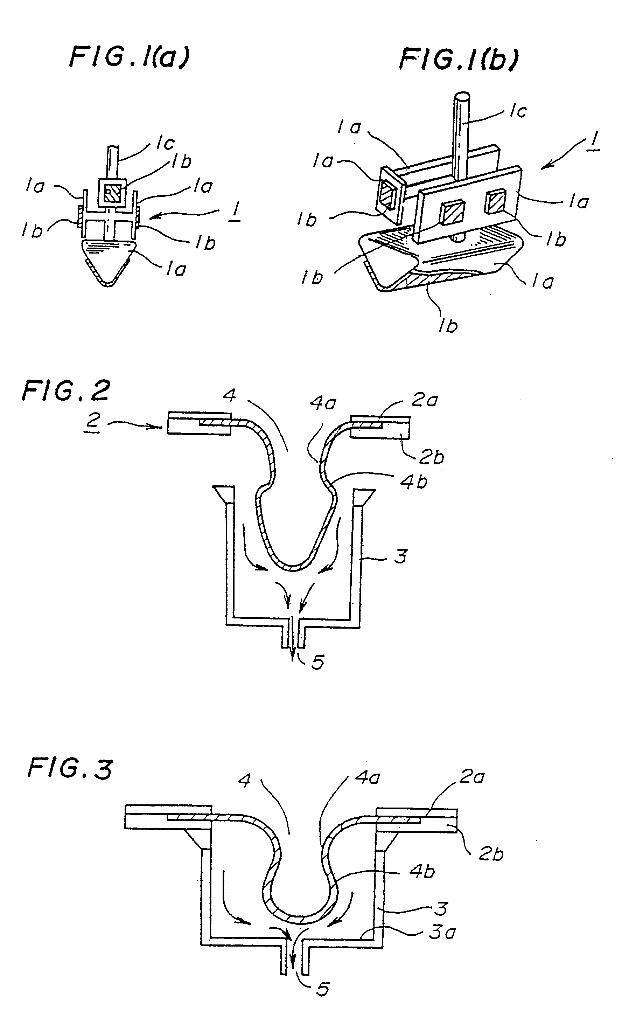

In the present invention, the structure and function of the elastic flexible molding die are substantially same as those of the conventional molding die. However, the use of an elastic pad portion of the die in combination with the molding die portion and the die holding portion serves to attain a simultaneous dual function of molding and tinting. In the simplest case, the elastic pad is a rod-like element easier to be inserted into the flexible molding die. In general, the shape itself of the elastic pad is not important and depends on the size and shape of moldings to be obtained. If the three-dimensional decorative pattern to be formed on the inner surface of the flexible molding die is complicate and the coloring substances have to be printed precisely on certain locations of the pattern, the elastic pad is preferably shaped in compliance with the complicate shape of the molding die as will be explained with respect to Fig. 1(a) or 1(b). The pressing surface of the elastic pad may not be flat and may have a curved surface or concavo-convex structure.

Referring to Figs. 1(a)-9(b), the elastic flexible molding die and the process of this invention for manufacturing molded articles are explained, for convenience' sake, with respect to the use of chocolate cakes, but the moldable materials are not limited to chocolate only. Throughout these drawings, the same numerals have the same meanings.

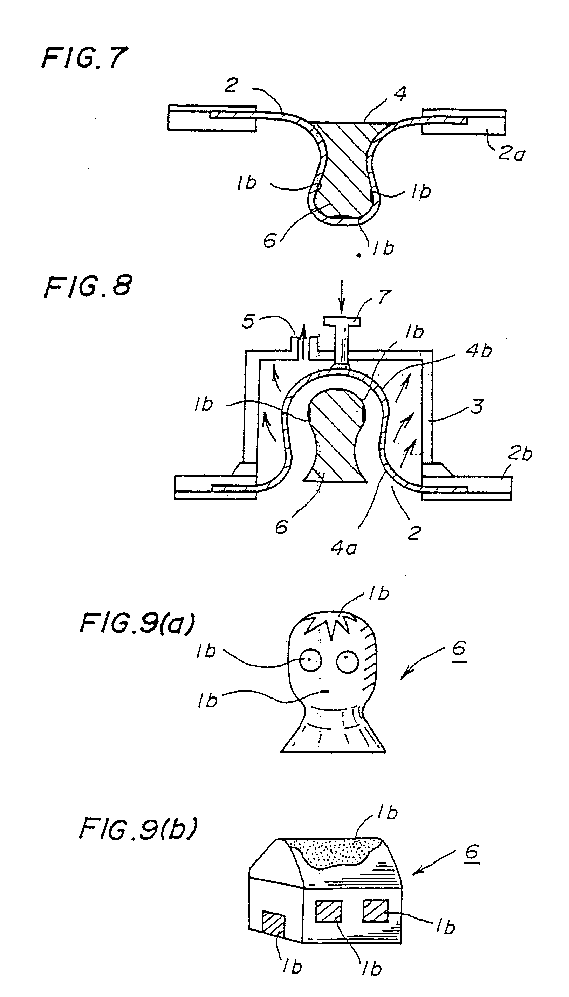

In Figs. 1(a) and 1(b), showing an example of the elastic pad of this invention, the elastic pad 1 is used for tinting a chocolate block in the form of a house as shown in Fig. 9(b). In this case, a three-dimensional decorative pattern (house) is rather complicate in structure so that the pad 1 has also a complicate structure in conformity with the pattern. Thus, the pad 1 has several pad surfaces 1a in conformity with the contour of the decorative pattern, and each pad surface is provided with one or more edible ink preparations 1b for printing, in case of house shown in Fig. 9(b), windows and snow on the roof. The location of the ink preparations 1b on the pad surfaces 1a is precisely determined according to a printer (not shown) equipped to a molding apparatus including the flexible molding die. This elastic pad 1 has a supporting rod 1c which enables introduction of the pad 1 into a flexible molding die or removal of the pad 1 from the die. If the decorative pattern is simple, the elastic pad 1 may be a simple rod-like one.

In Fig. 2 depicting the elastic flexible molding die 2 separately with a subatmospheric pressure chamber 3, the molding die 2 comprises a molding die portion 2a and a die holding portion 2b. The die portion 2a is made of a film or relatively thick membrane of rubbery or resinous material in the form of an open bag having an inner surface 4a where the decorative pattern is formed and an outer surface 4b to which subatmospheric pressure is actuated. The die holding portion 2b is a flat plate largely bored in the central portion thereof and the circumferential edge of the opening 4 of the die portion 2a is fixed integrally with the die holding portion 2b. The subatmospheric pressure chamber 3 is normally apart from the die holding portion 2b but is connected, where necessary, to the die holding portion 2b to form as a whole a confine chamber including the flexible die portion 2a. It is a matter of course that the material constituting the die portion 2a has hygienically acceptable nature in this case. The subatmospheric pressure chamber 3 is provided with a hole 5 through which air in the chamber may be evacuated or a pushing means may be passed as will be described hereinafter. In this Fig. 2, the cross section of the molding die portion 2a shows a cross section of a house having the structure as shown in Fig. 9(b).

In Fig. 3 showing another example of the molding die 2 integrally combined with the subatmosphric pressure chamber 3, the air in the chamber 3 is evacuated through the opening 5 formed on the bottom 3a of the subatmospheric pressure chamber whereby the air in the chamber is removed through the path shown by the arrow marks. As the chamber 3 is maintained under reduced pressure, the outer surface 4b of the die is drawn inward so that die is expanded as a whole. Accordingly, the inner surface 4a and the opening 4 of the die is enlarged so as to facilitate introduction of the elastic pad into the die in the form of an open bag. The elastic pad is introduced into the molding die portion 2a in this state.

Next, external air is allowed to enter in the chamber 3 through the hole 5 whereby the expanded molding die is shrinked to bring the entered elastic pad into contact with the inner surface of the die. In this operation, the ink preparations on the elastic pad is effectively transferred to the predetermined locations of the decorative pattern.

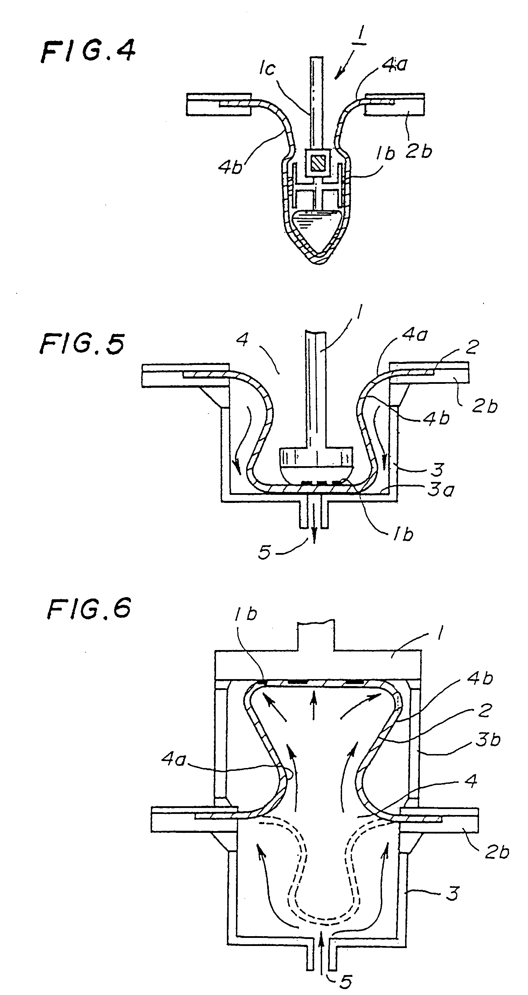

Fig. 4 depicts the elastic pad in this state; each pad surface of the elastic pad 1 is closely contacted with the inner surface of the die portion to transfer the ink preparations exactly to the predetermined locations of the decorative pattern. After transfer of the ink preparations onto the inner surface of the die portion, the chamber 3 is again maintained under reduced pressure to expand the die portion 2a and the opening 4 of the die. The elastic pad 1 can be taken out easily in this state.

In Fig. 5 showing another mode of contacting the elastic pad 1 with the inner surface 4a of the molding die portion 2a, the air in the subatmospheric pressure chamber 3 of a relatively shallow structure is evacuated from the chamber through the opening 5 to maintain the chamber under reduced pressure whereby the die 2 is expanded and its outer surface 4b is attached to the bottom 3a of the chamber 3. The elastic pad 1 in the form of a rod having the ink preparations 1b on the somewhat broadened bottom surface thereof is introduced into the molding die 2 in this state whereby the ink preparations 1b are transferred onto the decorative pattern formed on, the inner surface 4a of the molding die 2. This mode is advantageously be used if the printing is limited only to the upper portion of the molded article as shown in Fig. 9(a).

In Fig. 6 showing still another mode of contacting the elastic pad 1 with the inner surface 4a of the molding die 2, the tip of the elastic pad 1 forms a flat plate on which the ink preparations 1c are printed. On the other hand, the subatmospheric pressure chamber 3 as shown in Fig 3 is somewhat deformed by combining it with a bottomless flame 3b to form as a whole a deeper superatmospheric/subatmospheric pressure chamber. The tip of the elastic pad 1 in the form of a flat plate is then combined with the superatmospheric/subatmospheric chamber to form a confined chamber. When the chamber is pressurized by sending air or a gas through the opening 5 formed on the bottom of the chamber, the molding die 2 shown by a broken line is expanded as shown by the solid line and by the arrow marks indicating the flow of air or gas and the decorative pattern formed on the inner surface 4a (now on the outer surface 4b) is allowed to contact with the tip of the elastic pad 1 whereby the ink preparations 1c are transferred to the inner surface of the die portion 2a. As soon as the ink preparations have been attached to the inner surface of the die portion 2a, the chamber is maintained under normal pressure by evacuate excess air or gas and the expanded molding die portion 2a is reinstated to the original shape as shown by the broken line. This mode is also preferable in case printing of the molded article is limited only to the upper portion thereof as in the case of Fig. 5.

After completion of the printing of the decorative pattern by the ink preparations, the elastic pad 1 is removed from the molding die 2 and the expanded die portion 2a is reinstated to the original condition. Chocolate in fluidized or molten state is (then poured into the flexible molding die and taken out from the die after solidification whereupon molding and printing of chocolate is achieved concurrently in this one-shot treatment. A cooling device such as a cooling tunnel (not shown) may be equipped to the apparatus in the production line for expedite the solidification of chocolate. In case of treating chocolate, the temperature for fluidizing it is usually within 26-32°C although the, range is somewhat different according to the sort of ingredients incorporated into chocolate, while the temperature for solidification is generally set at 4-7°C. In case of treating other moldable material, the temperature ranges for making fluidized or viscous state and for solidification are suitably adjusted according to the nature of the material.

In Fig. 7 schematically showing the state of chocolate being introduced into the flexible molding die previously provided with the ink preparations for printing in the predetermined locations. A given-amount of fluid chocolate 6 maintained at 26-32°C is continuously fed by an automatic chocolate feeder (not shown) into the molding die 2 through the opening 4 of the molding die 2. The molding die 2 is then vibrated by a vibrator (not shown) installed below the die to eliminate any bubbles formed in the fluid chocolate while continuously moving a series of molding dies by a belt conveyer or the like transportation means toward a proper solidification device such as cooling tunnel (not shown) where the fluid chocolate is kept at 4-7°C for about 10 minutes. It has been found that the ink preparations 1a in the decorative pattern on the inner surface of the die portion 2a are partially or entirely molten by the fluid chocolate and transferred to the outer surface of the chocolate.

In Fig. 8 showing the state of the solidified chocolate block being taken out from the molding die, the die portion 2a is again expanded by evacuating the subatmospheric pressure chamber for facilitating removal of the chocolate block 6 from the die. Prior to removal of the chocolate block 6 from the die, the subatmospheric pressure chamber 3 integrally combined with the molding die 2 is preferably rotated by 180° against the horizontal axis to facilitate removal of the chocolate block 6 by its own gravity from the die. If necessary, a pushing rod 7 may be mounted to take out the chocolate block from the die easier. Alternatively, the inner surface of the die may be pressurized with air or a gas to expand the die for facilitating removal of the resultant chocolate block. No special limitation is set for the number, size and location of the pushing rod 7 so far as it can push out the chocolate block 6 without any damage.

Figs. 9(a) and ((b) show perspective views of the molded chocolate blocks obtained from the molding die shown in Fig. 7 and Fig. 4, respectively. The chocolate block shown in Fig. 9(a) represents the head of a doll, and tinting of the ink preparations is carried out in the molding die with a relatively simple elastic pad as shown in Fig. 5 or 6. In the chocolate block 6 shown in Fig. 9(b), however, tinting of the ink preparations is made allover the block 6 so that the die portion has to be printed with an elastic pad of a complicate structure as shown in Fig. 1(a).

According to the present invention, a number of advantages can be achieved; a unique and maximum merit of this invention is to attain molding and tinting of a moldable material at the same time in one-shot treatment. In the prior arts, moldings of a complicate three-dimensional decorative pattern can be obtained by using a flexible molding die, but a tinted moldings can never be obtained according to the technique using such flexible molding die in a single treatment. In fact, it is economically unattractive to effect molding and tinting of a moldable material separately. In addition, it is difficult to print patterns on specific locations of the moldings once manufactured. In the present invention multi-color printing of moldings can also be made without difficulty and the printing is carried out precisely in a specific location of the decorative pattern. For these purposes, an elastic pad used can be selected from various kinds of pads, for example, those having a relatively complicate pad surfaces for printing complicate decorative patterns or simple rod-like one for printing a limited area of the pattern. It is also an advantage of the present invention that no substantial modification is necessary in the production line of, the moldings since what is added to the process is only the treatment with the elastic pad. Further, shear in printing hardly takes place in moldings according to the present invention.

As has been described hitherto, the technical effects achieved by using the elastic pad of this invention are excellent and applicable to the moldings in various fields.

## Claims

1. An elastic flexible molding die (2) for manufacturing molded articles having a three-dimensional decorative pattern printed with a coloring substance, which comprises a molding die portion (2a) as a first constructive element, in the form of a flexible open bag capable of being charged on the inner surface thereof (4a) with a fluid or viscous moldable material which may be taken out therefrom after solidification and a die holding portion (2b) as a second constructive element integrally shaped with an opening (4) of the molding die portion (2a) and capable of maintaining the outer surface (4b) of the molding die portion (2a) under reduced pressure, characterized in that the molding die portion (2a) is provided on the inner surface thereof (4a) forming a female figure corresponding to the three-dimensional decorative pattern with at least one coloring substance (1b) transferred from an elastic pad portion (1) as a third constructive element of the die (2) and capable of printing a pattern in conformity with the decorative pattern on the material.

2. An elastic flexible molding die according to claim 1, wherein the molding die (2) is made of an elastic flexible natural or synthetic rubber or a synthetic resin of a similar nature.

3. An elastic flexible molding die according to claim 1, wherein the elastic pad (1) is comprised of a supporting rod (1c) and one or more pad surfaces (1a) provided in predetermined locations with at least one coloring substance (1b).

4. An elastic flexible molding die according to claim 1, wherein the elastic pad (1) is in the form of rod provided on the somewhat broadened bottom surface thereof with at least one coloring substance (1b).

5. An elastic flexible molding die according to claim 1, wherein the elastic pad (1) forms a flat plate at the tip thereof provided with at least one coloring' substance (1b).

6. A process for manufacturing molded articles with a three-dimensional decorative pattern printed with at least one coloring substance (1b), which comprises charging an elastic flexible molding die (2) in the form of an open bag, which has on the inner surface thereof (4a) a female figure corresponding to the three-dimensional decorative pattern printed with at least one coloring substance (1b), with a fluid or viscous moldable material, solidifying the moldable material in compliance with the pattern on the inner surface (4a) of the molding die (2) while printing the material with the coloring substance (1b), and thereafter discharging the resultant molded article from the die (2) by expanding the volume of the die (2) in the form of the open bag while optionally pushing out the article with a pushing device (7), characterized in that the molding die (2) has been provided on the inner surface thereof (4a) with at least one coloring substance (1b) by bringing an elastic pad (1) provided on the surface thereof with at least one coloring substance (1b) in compliance with the pattern into contact with the inner surface (4a) of the molding die (2).

7. A process according to claim 6, wherein the expanding of the volume of the elastic flexible molding die (2) is attained by placing the flexible molding die (2) in a subatmospheric pressure chamber (3) forming the flexible molding die (2) as a part of the wall of the chamber (3) and evacuating air in the chamber (3) to maintain the interior of the chamber (3) under reduced pressure thereby expanding the volume of the die (2).

## Patentansprüche

1. Elastische flexible Gießform (2) zur Herstellung von Formteilen mit einem dreidimensionalen Dekormuster, das mit einem Färbemittel bedruckt ist, mit einem Gießformabschnitt (2a) als ein erstes Bauelement in Form einer flexiblen offenen Tasche, die auf ihrer Innenfläche (4a) mit einem flüssigen oder viskosen gießbaren Material gefüllt werden kann, welches nach Verfestigung aus der Tasche herausnehmbar ist, und mit einem Gießformhalteabschnitt (2b) als ein zweites Bauelement, welches einstückig mit einer Öffnung (4) des Gießformabschnitts (2a) ausgebildet ist und die Außenflache (4b) des Gießformabschnitts (2a) unter reduziertem Druck halten kann, **dadurch gekennzeichnet, daß** der Gießformabschnitt (2a) auf seiner Innenfläche (4a), die ein aufnehmendes Teil bildet, entsprechend des dreidimensionalen Dekormusters mit mindestens einem Färbemittel (1b) versehen ist, welches von einem elastischen Kissenabschnitt (1) als einem dritten Bauelement der Gießform (2) übertragen ist und ein Muster in Übereinstimmung mit dem Dekormuster auf dem Material drucken kann.

2. Elastische flexible Gießform nach Anspruch 1, **dadurch gekennzeichnet, daß** die Gießform (2) aus einem elastischen flexiblen natürlichen oder künstlichen Gummi oder einem Kunstharz mit einer ähnlichen Eigenschaft hergestellt ist.

3. Elastisch flexible Gießform nach Anspruch 1, **dadurch gekennzeichnet, daß** das elastische Kissen (1) eine Stützstange (1c) und eine oder mehrere Kissenflächen (1a) aufweist, die an vorbestimmten Stellen mit mindestens einem Färbemittel (1b) versehen sind.

4. Elastische flexible Gießform nach Anspruch 1, **dadurch gekennzeichnet, daß** das elastische Kissen (1) in Form einer Stange gebildet ist, die an einer etwas verbreiterten Bodenfläche mit mindestens einem Färbemittel (1b) versehen ist.

5. Elastische flexible Gießform nach Anspruch 1, **dadurch gekennzeichnet, daß** das elastische Kissen (1) eine ebene Platte an seiner Spitze bildet, die mit mindestens einem Färbemittel (1b) versehen ist.

6. Verfahren zur Herstellung von Formteilen mit einem dreidimensionalen Dekormuster, welches mit mindestens einem Färbemittel (1b) bedruckt wird, bei dem eine elastische flexible Gießform (2) in Form einer offenen Tasche, welche auf ihrer Innenfläche (4a) ein aufnehmendes Teil entsprechend dem dreidimensionalen Dekormuster hat, welches mit mindestens einem Färbemittel (1b) bedruckt ist, mit einem flüssigen oder viskosen gießfähigen Material gefüllt wird, daß das gießfähige Material in Übereinstimmung mit dem Muster auf der Innenfläche (4a) der Gießform (2) verfestigt wird, wobei das Material mit dem Färbemittel (1b) bedruckt wird, und daß danach der entstandene Formteil aus der Gießform (2) entnommen wird, indem das Volumen der Form (2) in Form der offenen Tasche expandiert wird, wobei gegebenfalls der Gegenstand mit einer Stoßeinrichtung (2) herausgedrückt wird, **dadurch gekennzeichnet, daß** die Gießform (2) auf ihrer Innenfläche mit mindestens einem Färbemittel (1b) versehen wird, indem ein elastisches Kissen (1), das an einer Oberfläche mit mindestens einem Färbemittel (1b) in Übereinstimmung mit dem Muster versehen ist, in Kontakt mit der Innenfläche 4(a) der Gießform (2) gebracht wird.

7. Verfahren nach Anspruch 6, **dadurch gekennzeichnet, daß** das Expandieren des Volumens der elastischen flexiblen Gießform (2) dadurch erreicht wird, daß die flexible Gießform (2) in eine Unterdruckkammer (3) gebracht wird, welche die flexible Gießform (2) als einen Teil der Kammerwand (3) ausbildet und in der Kammer (3) abgezogen wird, um den Innenraum der Kammer (3) unter reduziertem Druck zu halten, wodurch das Volumen der Form (2) expandiert.

## Revendications

1. Moule flexible élastique (2) pour fabriquer des articles moulés portant un motif décoratif tridimensionnel imprimé avec une substance colorante, qui comprend une portion moule (2a) constituant un premier élément de construction et formé d'un sac ouvert flexible qui peut être chargé, sur sa surface interne (4a), d'une matière moulable fluide et visqueuse qui peut en être extraite après solidification, et une portion porte-moule (2b), constituant un deuxième élément de construction, d'une forme qui correspond à une ouverture (4) de la portion moule (2a), et qui est capable de maintenir la surface externe (4b) de la portion moule (2a) sous une pression réduite, caractérisé en ce que la portion moule (2a) est munie, sur sa surface interne (4a), qui forme une figure en creux correspondant au motif décoratif tridimensionnel, d'au moins une substance colorante (1b) qui est transférée à partir d'une portion tampon élastique (1) constituant un troisième élément de construction du moule (2), et capable d'imprimer sur la matière un motif en conformité avec le motif décoratif.

2. Moule flexible élastique selon la revendication 1, dans lequel le moule (2) est fait d'un caoutchouc naturel ou synthétique flexible élastique ou d'une résine synthétique flexible élastique d'une nature similaire.

3. Moule flexible élastique selon la revendication 1, dans lequel le tampon élastique (1) est composé d'une tige support (1c) et d'une ou plusieurs surfaces de tampon (1a) munies d'au moins une substance colorante (1b) en des zones prédéterminées.

4. Moule flexible élastique selon la revendication 1, dans lequel le tampon élastique (1) se présente sous la forme d'une tige munie d'au moins une substance colorante (1b) sur sa surface de base quelque peu élargie.

5. Moule flexible élastique selon la revendication 1, dans lequel le tampon élastique (1) forme une plaque plate munie d'au moins une substance colorante (1b) à son extrémité.

6. Procédé de fabrication d'articles moulés portant un motif décoratif tridimensionnel imprimé avec au moins une substance colorante (1b), qui consiste à charger d'une matière moulable fluide ou visqueuse un moule flexible élastique (2) présentant la forme d'un sac ouvert, qui présente sur sa surface interne (4a) une figure en creux correspondant au motif décoratif tridimensionnel imprimée avec au moins une substance colorante (1b), faire solidifier la matière moulable conformément au motif porté par la surface interne (4a) du moule (2) en même temps qu'on imprime la matière avec la substance colorante (1b), puis décharger l'article moulé résultant du moule (2) en dilatant le volume du moule (2) constitué par un sac ouvert en même temps qu'on éjecte facultativement l'article avec un dispositif poussoir (7), caractérisé en ce que le moule (2) a été muni sur sa surface interne (4a) d'au moins une substance colorante (1b) en mettant un tampon élastique (1) muni d'au moins une substance colorante (1b) sur sa surface en conformité avec le motif, en contact avec la surface interne (4a) du moule (2).

7. Procédé selon la revendication 6, dans lequel la dilatation du volume du moule flexible élastique (2) est obtenue en plaçant le moule flexible élastique (2) dans une chambre à dépression (3) dans laquelle le moule flexible (2) forme une partie de la paroi de la chambre (3) et en évacuant l'air de la chambre (3) pour maintenir l'intérieur de la chambre (3) sous pression réduite, et dilater ainsi le volume du moule (2).
